# EUROPÄISCHE PATENTSCHRIFT

(11) **EP 3 692 555 B1**
(45) Veröffentlichungstag und Bekanntmachung des Hinweises auf die Patenterteilung: **21.04.2021**
(21) Anmeldenummer: 18786674.4
(22) Anmeldetag: 26.09.2018
(51) Int. Cl.: H01F 27/02, H01F 38/14, H02J 50/10

(54) **SYSTEM ZUR BERÜHRUNGSLOSEN ÜBERTRAGUNG VON ELEKTRISCHER ENERGIE AN EIN MOBILTEIL**
SYSTEM FOR NON-CONTACT TRANSMISSION OF ELECTRICAL ENERGY TO A MOBILE PART
SYSTÈME DE TRANSMISSION SANS CONTACT D'ÉNERGIE ÉLECTRIQUE À UN ÉLÉMENT MOBILE

(30) Priorität: 06.10.2017 DE 102017009285
(43) Veröffentlichungstag der Anmeldung: 12.08.2020
(73) Patentinhaber: SEW-EURODRIVE GmbH & Co. KG, 76646 Bruchsal (DE)
(72) Erfinder: JAHN, Nils-Malte, 692019 Sandhausen (DE); KREMPEL, Thomas, 76707 Hambrücken (DE); EGGER, Björn, 76646 Bruchsal (DE)
(86) Internationale Anmeldenummer: PCT/EP2018/025250
(87) Internationale Veröffentlichungsnummer: WO 2019/068366

(56) Entgegenhaltungen:
- WO-A1-2016/143341
- DE-A1-102009 057 437
- US-A1- 2013 112 519

## Beschreibung

Die Erfindung betrifft ein System zur berührungslosen Übertragung von elektrischer Energie an ein Mobilteil.

**Aus der** US 2014 / 0 240 947 A1 **ist eine Leistungs-empfangende Vorrichtung bekannt.**

**Aus der** WO 2011 /117 714 A2 **ist ein System zur berührungslosen Übertragung von elektrischer Energie bekannt.**

**Aus der** JP 2012 - 222 956 A **ist ebenfalls ein System zur berührungslosen Übertragung von elektrischer Energie bekannt.**

**Aus der** US 2012 / 0 218 068 A1 **ist eine Antenne bekannt.**

**Aus der** US 2017 0 237 295 A1 **ist ein System zur berührungslosen Übertragung von elektrischer Energie bekannt.**

**Aus der** US 5 528 113 A **ist ein System zur induktiven Übertragung von elektrischer Energie bekannt.**

**Aus der** US 2014 / 0 361 635 A1 **ist ebenfalls ein System zur berührungslosen Übertragung von elektrischer Energie bekannt.**

**Aus der** US 2013/112519 A1 **ist als nächstliegender Stand der Technik ein Energieübertragungssystem für ein Fahrzeug bekannt.**

**Aus der** DE 10 2009 057437 A1 **ist eine Anordnung zum induktiven Beladen eines Energiespeichers eines Fahrzeugs bekannt.**

**Aus der** WO 2016/143341 A1 **ist ein berührungsloses Leistungsübertragungssystem bekannt.**

Der Erfindung liegt daher die Aufgabe zugrunde, eine möglichst kompakte Ladeeinheit für die induktive Übertragung bereitstellbar zu machen.

Erfindungsgemäß wird die Aufgabe bei dem System nach den in Anspruch 1 angegebenen Merkmalen gelöst.

Wichtige Merkmale der Erfindung bei dem System zur berührungslosen Übertragung von elektrischer Energie an ein Mobilteil sind, dass das System eine in einer in ein Bodenmaterial eingebrachten Bohrung aufweist,
wobei ein Rahmenteil in der Bohrung aufgenommen ist,
wobei im Rahmenteil ein Aufnahmeteil angeordnet ist,
wobei eine elektronische Schaltung in dem Aufnahmeteil angeordnet ist.
wobei das Aufnahmeteil zumindest teilweise durch ein Deckelteil gehäusebildend abgedeckt ist, insbesondere an einer seiner Seiten
wobei im Deckelteil eine Primärwicklung angeordnet ist, welche induktive koppelbar mit einer an der Unterseite des Mobilteil angeordneten Sekundärwicklung ist,
wobei zwischen Aufnahmeteil und Rahmenteil ein Blechteil angeordnet ist,
wobei das Blechteil das Aufnahmeteil berührt und wobei das Blechteil das Rahmenteil berührt.

Von Vorteil ist dabei, dass die Wärmeabfuhr verbessert ist, da nun die Wärme vom Aufnahmeteil für die elektronische Schaltung zum Rahmenteil durch das Blechteil, also ein gut wärmeleitendes Material hindurchgeführt wird. Das Rahmenteil ist direkt mit dem Betonmaterial verbunden. Da Betonmaterial gut wärmeleitend ist, ist somit eine effektive Wärmeabfuhr gewährleistet. Außerdem ist das Blechteil kostengünstig und einfach aus einem gewellten Blech herstellbar, so dass radial außen und innen jeweils Linienberührung vorgesehen ist. Durch die Ausführung des Aufnahmeteils aus Kunststoff ist eine spannungsfeste elektrische Isolation gewährleistbar.

Bei einer vorteilhaften Ausgestaltung ist das Rahmenteil stoffschlüssig mittels Vergussmasse mit dem Bodenmaterial verbunden. Von Vorteil ist dabei, dass wärmeleitende Vergussmasse den Wärmeübergang zwischen Rahmenteil und Bodenmaterial weiter verbessert.

Bei einer vorteilhaften Ausgestaltung ist das Aufnahmeteil aus Kunststoff gefertigt. Von Vorteil ist dabei, dass eine ausreichende Isolationsfestigkeit erreichbar ist. Auch wenn die elektronische Schaltung für hohe Spannungen ausgelegt ist, ist also ein ausreichender elektrischer Isolationsabstand zur Umgebung hin erreichbar.

Bei einer vorteilhaften Ausgestaltung ist das Blechteil aus Wellblech gefertigt, wobei das Blechteil in Umfangsrichtung um das Aufnahmeteil umlaufend ausgebildet ist. Von Vorteil ist dabei, dass eine kostengünstige Herstellung ermöglicht ist und die in der Linienberührung radial innen aufgenommene Wärme aufgespreizt wird, so dass ein Teil des Wärmestroms an der großen Oberfläche an die das Blechteil umgebende Luft abgegeben wird. Somit strömt die Wärme nicht nur an der Linienberührung zwischen Blechteil und Rahmenteil in das Rahmenteil ein, sondern auch von der das Blechteil umgebenden Luft zum Rahmenteil hin.

Bei einer vorteilhaften Ausgestaltung weist die elektronische Schaltung einen Wechselrichter und/oder einen Gyrator auf,
insbesondere wobei der wechselspannungsseitige Anschluss des Wechselrichters mit der Eingangsseite des Gyrators und der ausgangsseitige Anschluss des Gyrators mit der Primärwicklung verbunden ist, wobei die Bauteile, wie Kapazität und Induktivität des Gyrators resonant abgestimmt ist auf die Frequenz der am wechselspannungsseitigen Ausgang des Wechselrichters bereit gestellten Wechselspannung. Von Vorteil ist dabei, dass der Wechselrichter an seinem wechselspannungsseitigen Anschluss zwar ein spannungsquellenartiges Verhalten aufweist, aber die Primärwicklung aus dem Gyrator mit einem stromquellenartigen verhalten gespeist wird. Somit wird also ein Wechselstrom in die Primärwicklung eingeprägt.

Bei einer vorteilhaften Ausgestaltung ist die Anzahl der sich in Umfangsrichtung erstreckenden Wellen größer als zwanzig. Von Vorteil ist dabei, dass eine hohe Anzahl von Linienberührungen vorgesehen ist und somit ein guter Wärmeübergang erreicht ist.

Bei einer vorteilhaften Ausgestaltung ist das Blechteil aus Aluminium oder Kupfer ausgeführt. Von Vorteil ist dabei, dass das Blechteilaus sehr gut wärmeleitendem Material ausführbar ist.

Bei einer vorteilhaften Ausgestaltung ist das Deckelteil aus Kunststoff gefertigt. Von Vorteil ist dabei, dass die Primärwicklung isolationsfest anordenbar ist und trotzdem ein bündiges Überfahren des Deckelteils durch das Mobilteil ermöglicht ist. hierzu schließt das Deckelteil vorzugsweise glatt an die Oberfläche des mit Beschichtung versehenen Bodenmaterials an.

Die Erfindung wird nun anhand von schematischen Abbildungen näher erläutert:
In der Figur 1 ist ein System zur berührungslosen Übertragung von elektrischer Leistung an ein Mobilteil explodiert dargestellt.

In der Figur 2 ist ein zugehöriger Querschnitt gezeigt.

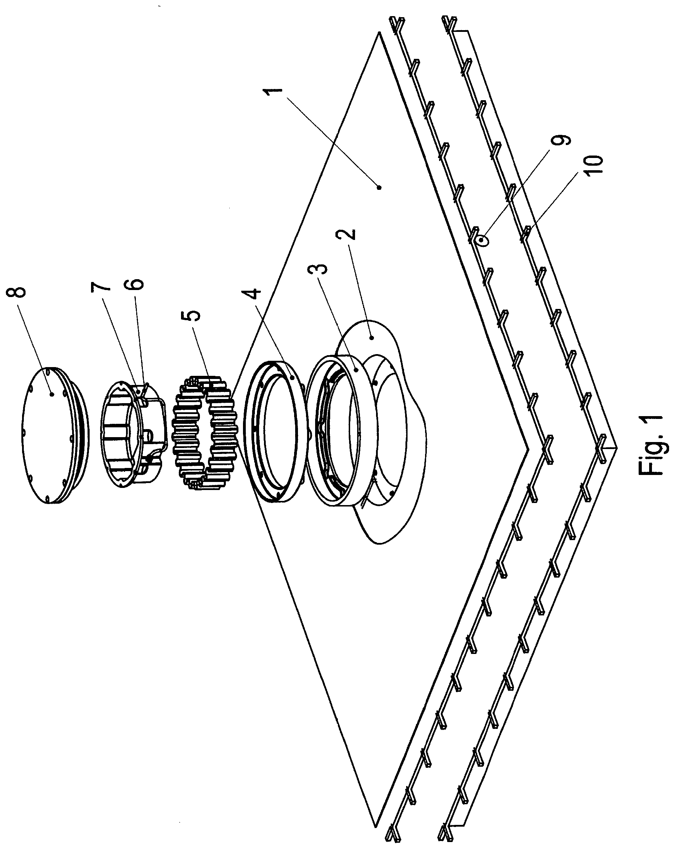

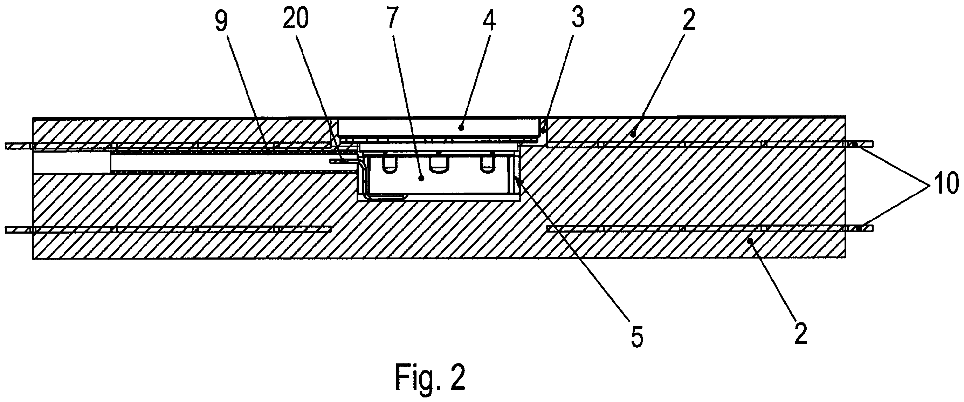

Wie in Figur 1 und Figur 2 dargestellt, ist das Bodenmaterial 2 des Bodens einer Anlage mit einer Beschichtung 1 versehen, deren Oberfläche als Verfahrfläche für ein Mobilteil fungiert.

An der Unterseite des in den Figuren nicht dargestellten Mobilteils ist eine Sekundärwicklung angeordnet, welche an einer Position des Mobilteils mit einer am Boden angeordneten Primärwicklung induktiv koppelbar vorsehbar ist.

Im Bodenmaterial 2 ist eine aus Stahlstäben gefertigte Bewehrung 10 angeordnet und ein Leerrohr, in welchem ein Kabel 6 zu einer Ladeeinheit geführt ist, welche in einer in das Bodenmaterial eingebrachten Bohrung, insbesondere Stufenbohrung, angeordnet ist.

Auf die Stufe der als Stufenbohrung ausgeführten Ausnehmung ist ein Rahmenteil 4 aufgelegt, welches stoffschlüssig mittels Vergussmasse 3 mit dem Bodenmaterial 2 verbunden ist.

Im Rahmenteil ist ein Aufnahmeteil 7, welches aus Kunststoff gefertigt ist, angeordnet, wobei zwischen Rahmenteil 4 und Aufnahmeteil 7 ein Blechteil 5 zwischengeordnet ist, welches sowohl das Rahmenteil 4 als auch das Aufnahmeteil 7 berührt.

Im Aufnahmeteil 7 ist ein Deckelteil 8 angeordnet, in welchem die Primärwicklung angeordnet ist.

Mit Wechselstrom gespeist wird die Primärwicklung aus einer elektronischen Schaltung, welche ebenfalls im Aufnahmeteil 7 aufgenommen ist und mittels des Kabels 6 mit elektrischer Leistung versorgt ist.

Die elektronische Schaltung weist einen Wechselrichter auf, dessen wechselspannungsseitiger Anschluss einen Gyrator speist, der ausgangsseitig die Primärwicklung speist und auf die Frequenz der am wechselspannungsseitigen Anschluss des Wechselrichters bereit gestellten Spannung resonant abgestimmt ist.

Das Blechteil 5 ist als Wellblech ausgeführt. Das Blechteil 5 umgibt das Aufnahmeteil 7 an seinem Umfang. In Umfangsrichtung umfasst der vom Blechteil 5 überdeckte Bereich den vom Aufnahmeteil 7 in Umfangsrichtung überdeckten Bereich.

Ebenso überlappt der vom Aufnahmeteil 7 axial überdeckte Bereich mit dem vom Blechteil 5 axial überdeckten Bereich.

Somit ist eine verbesserte Entwärmung der elektronischen Schaltung erreicht, da das Blechteil 5 als Wärmeleitbrücke zur Entwärmung fungiert.

Das Deckelteil ist vorzugsweise aus einem nichtmagnetischen Werkstoff gefertigt, insbesondere Kunststoff oder Aluminium.

Das Deckelteil 5 ist zur Verfahrfläche bündig angeordnet, so dass ein Überfahren des Deckelteils 5 ohne Hindernis ermöglicht ist.

Das Blechteil 5 weist Wellen mit einer Amplitude auf, wobei die Wellenlänge in Umfangsrichtung einen Umfangswinkelbereich von weniger als 20° überdeckte, insbesondere also die Anzahl der Wellen am Umfang größer als achtzehn ist, insbesondere wobei die Wellenlänge in Umfangsrichtung 15° beträgt. Vorzugsweise gleicht die Amplitude der Wellen der Hälfte der Differenz zwischen dem größten Radialabstand des Aufnahmeteils 7 und dem kleinsten Radialabstand des Rahmenteils 4.

Vorzugsweise ist das Blechteil aus Aluminium oder Kupfer ausgeführt, so dass eine hohe Wärmeleitfähigkeit vorhanden ist. Alternativ ist auch kostengünstiges Stahlblech verwendbar.

### Bezugszeichenliste

1 Beschichtung
2 Bodenmaterial
3 Vergussmasse
4 Rahmenteil
5 Blechteil
6 Kabel
7 Aufnahmeteil
8 Deckelteil
9 Leerrohr
10 Bewehrung

## Patentansprüche

1. System zur berührungslosen Übertragung von elektrischer Energie an ein Mobilteil, wobei das System eine in ein Bodenmaterial (2) eingebrachte Bohrung aufweist, wobei ein Rahmenteil (4) in der Bohrung aufgenommen ist,
wobei im Rahmenteil (4) ein Aufnahmeteil (7) angeordnet ist,
wobei eine elektronische Schaltung in dem Aufnahmeteil (7) angeordnet ist, wobei das Aufnahmeteil (7) zumindest teilweise durch ein Deckelteil (8) gehäusebildend abgedeckt ist, insbesondere an einer seiner Seiten,
wobei im Deckelteil (8) eine Primärwicklung angeordnet ist, welche induktive koppelbar mit einer an der Unterseite des Mobilteils angeordneten Sekundärwicklung ist,
**dadurch gekennzeichnet, dass**
zwischen Aufnahmeteil (7) und Rahmenteil (4) ein Blechteil (5) angeordnet ist, wobei das Blechteil (5) das Aufnahmeteil (7) berührt und wobei das Blechteil (5) das Rahmenteil (4) berührt.

2. System nach Anspruch 1,
**dadurch gekennzeichnet, dass**
das Rahmenteil (4) stoffschlüssig mittels Vergussmasse (3) mit dem Bodenmaterial (2) verbunden ist.

3. System nach mindestens einem der vorangegangenen Ansprüche,
**dadurch gekennzeichnet, dass**
das Aufnahmeteil (7) aus Kunststoff gefertigt ist.

4. System nach mindestens einem der vorangegangenen Ansprüche,
**dadurch gekennzeichnet, dass**
das Blechteil (5) aus Wellblech gefertigt ist,
wobei das Blechteil (5) in Umfangsrichtung um das Aufnahmeteil (7) umlaufend ausgebildet ist.

5. System nach mindestens einem der vorangegangenen Ansprüche,
**dadurch gekennzeichnet, dass**
die elektronische Schaltung einen Wechselrichter und/oder einen Gyrator aufweist, insbesondere wobei der wechselspannungsseitige Anschluss des Wechselrichters mit der Eingangsseite des Gyrators und der ausgangsseitige Anschluss des Gyrators mit der Primärwicklung verbunden ist, wobei die Bauteile, wie Kapazität und Induktivität des Gyrators resonant abgestimmt ist auf die Frequenz der am wechselspannungsseitigen Ausgang des Wechselrichters bereit gestellten Wechselspannung.

6. **System nach Anspruch 4,**
**dadurch gekennzeichnet, dass**
die Anzahl der sich in Umfangsrichtung erstreckenden Wellen **des Wellblechs** größer als zwanzig ist.

7. System nach mindestens einem der vorangegangenen Ansprüche,
**dadurch gekennzeichnet, dass**
das Blechteil (5) aus Aluminium oder Kupfer ausgeführt ist.

8. System nach mindestens einem der vorangegangenen Ansprüche,
**dadurch gekennzeichnet, dass**
das Deckelteil (8) aus Kunststoff gefertigt ist.

## Claims

1. A system for the contactless transmission of electrical energy to a mobile part,
wherein the system has a bore made in a base material (2),
wherein a frame part (4) is received in the bore,
wherein a receiving part (7) is arranged in the frame part (4),
wherein an electronic circuit is arranged in the receiving part (7),
wherein the receiving part (7) is at least partially covered by a cover part (8) in a housing-forming manner, in particular at one of its sides,
wherein a primary winding is arranged in the cover part (8) and can be inductively coupled to a secondary winding arranged at the underside of the mobile part,
**characterised in that**
a sheet-metal part (5) is arranged between receiving part (7) and frame part (4),
wherein the sheet-metal part (5) contacts the receiving part (7) and wherein the sheet-metal part (5) contacts the frame part (4).

2. A system according to claim 1,
**characterised in that**
the frame part (4) is connected to the base material (2) in a material-locked manner by means of sealing compound (3).

3. A system according to at least one of the preceding claims,
**characterised in that**
the receiving part (7) is manufactured out of plastics material.

4. A system according to at least one of the preceding claims,
**characterised in that**
the sheet-metal part (5) is manufactured out of corrugated sheet metal,
wherein the sheet-metal part (5) encircles the receiving part (7) in a circumferential direction.

5. A system according to at least one of the preceding claims,
**characterised in that**
the electronic circuit has an inverter and/or a gyrator,
in particular wherein the inverter connection at the alternating voltage side is connected to the input side of the gyrator and the output-side connection of the gyrator is connected to the primary winding, wherein the components, such as capacitor and inductor of the gyrator, are matched resonantly to the frequency of the alternating voltage provided at the inverter output at the alternating voltage side.

6. A system according to claim 4,
**characterised in that**
the number of the flutes, extending in a circumferential direction, of the corrugated sheet metal is greater than twenty.

7. A system according to at least one of the preceding claims,
**characterised in that**
the sheet-metal part (5) is made of aluminium or copper.

8. A system according to at least one of the preceding claims,
**characterised in that**
the cover part (8) is manufactured out of plastics material.

## Revendications

1. Système de transmission sans contact d'énergie électrique à une partie mobile, le système comportant un trou ménagé dans un matériau de sol (2),
une partie cadre (4) étant reçue dans le trou, une partie réceptrice (7) étant disposée dans la partie cadre (4), un circuit électronique étant disposé dans la partie réceptrice (7),
la partie réceptrice (7) étant recouverte au moins partiellement, en particulier sur l'un de ses côtés, par une partie couvercle (8) en formant un boîtier,
un enroulement primaire étant disposé dans la partie couvercle (8), lequel peut être couplé par induction à un enroulement secondaire disposé sur la face inférieure de la partie mobile,
**caractérisé en ce que**
une partie en tôle (5) est disposée entre la partie réceptrice (7) et la partie cadre (4), la partie en tôle (5) touchant la partie réceptrice (7) et la partie en tôle (5) touchant la partie cadre (4).

2. Système selon la revendication 1,
**caractérisé en ce que**
la partie cadre (4) est reliée par une liaison de matière au matériau de sol (2) au moyen d'une matière d'enrobage (3) .

3. Système selon l'une au moins des revendications précédentes,
**caractérisé en ce que**
la partie réceptrice (7) est en matière synthétique.

4. Système selon l'une au moins des revendications précédentes,
**caractérisé en ce que**
la partie en tôle (5) est en tôle ondulée,
la partie en tôle (5) étant conçue pour s'étendre autour de la partie réceptrice (7) dans la direction circonférentielle.

5. Système selon l'une au moins des revendications précédentes,
**caractérisé en ce que**
le circuit électronique comporte un onduleur et/ou un gyrateur,
en particulier la borne côté tension alternative de l'onduleur étant reliée au côté entrée du gyrateur et la borne côté sortie du gyrateur étant reliée à l'enroulement primaire, les composants tels que la capacité et l'inductance du gyrateur étant adaptés de manière résonante à la fréquence de la tension alternative disponible à la sortie côté tension alternative de l'onduleur.

6. Système selon la revendication 4,
**caractérisé en ce que**
le nombre d'ondulations de la tôle ondulée, lesquelles s'étendent dans la direction circonférentielle, est supérieur à vingt.

7. Système selon l'une au moins des revendications précédentes,
**caractérisé en ce que**
la partie en tôle (5) est en aluminium ou en cuivre.

8. Système selon l'une au moins des revendications précédentes,
**caractérisé en ce que**
la partie couvercle (8) est en matière synthétique.
